# FASCICULE DE BREVET EUROPEEN

(11) **EP 1 945 986 B1**
(45) Date de publication et mention de la délivrance du brevet: **18.03.2009**
(21) Numéro de dépôt: 06831044.0
(22) Date de dépôt: 31.10.2006
(51) Int. Cl.: F16L 33/035, F16B 2/08, F16L 55/035

(54) **COLLIER DE SERRAGE RAPIDE**
SCHNELLKLEMMSCHELLE
QUICK-ACTION CLAMPING COLLAR

(30) Priorité: 09.11.2005 FR 0511409
(43) Date de publication de la demande: 23.07.2008
(73) Titulaire: ALDES AERAULIQUE, 69200 Venissieux Cedex (FR)
(72) Inventeur: CHARDON, Gérard, 49130 LES PONT DE CE (FR); VEILLON, Frédéric, F-60700 Echalas (FR)
(74) Mandataire: Maureau, Philippe
(86) Numéro de dépôt international: PCT/FR2006/002437
(87) Numéro de publication internationale: WO 2007/057530

(56) Documents cités:
- EP-A- 0 936 393
- GB-A- 2 093 109
- US-A- 5 474 268
- US-A- 5 499 430
- US-A- 5 613 281

## Description

La présente invention concerne un collier de serrage rapide destiné notamment à raccorder un conduit souple ou semi-souple à un point fixe, par exemple à un groupe de ventilation.

En particulier, il est connu de réaliser un tel collier de serrage sous la forme d'une seule pièce sensiblement annulaire fendue, qui comporte un corps de base et deux extrémités de blocage munies de dentures opposées correspondantes, destinées à entrer en prise l'une avec l'autre. Chaque denture comprend une série de dents inclinées dans une direction opposée à la direction de fermeture du collier, voir US 5 474 268 A. Le dégagement des extrémités du collier s'effectue en déplaçant tout d'abord l'une des dentures dans un sens perpendiculaire à son plan, puis en l'extrayant de l'autre extrémité.

Ce type de collier, habituellement réalisé en matière synthétique, assure un raccordement efficace sans risque de désolidarisation accidentelle de ses extrémités.

Le plus souvent, un conduit de transport d'air de ventilation comporte une armature métallique, en fil hélicoïdal, et une "peau" en matière plastique ou en aluminium. Cette peau est parfois recouverte d'une deuxième peau enserrant un matelas isolant de faible épaisseur, et l'on parle alors d'un conduit à "double peau".

Du fait de leur souplesse, de tels conduits peuvent se déformer et leur diamètre extérieur varier, ce qui peut affecter la tenue du collier de serrage.

La présente invention se propose d'éviter cet inconvénient en fournissant un collier de serrage du type précité qui soit en mesure d'assurer un raccordement efficace avec un conduit souple ou semi-souple, à simple ou double peau.

A cet effet, l'invention a pour objet un collier de serrage constitué d'une seule pièce fendue, comportant un corps de base et deux extrémités de blocage munies de dentures opposées correspondantes, destinées à entrer en prise l'une avec l'autre, et comprenant chacune une série de dents inclinées dans une direction opposée à la direction de fermeture du collier, une partie intermédiaire du corps de base étant ondulée de manière à former une charnière, caractérisé en ce qu'une pluralité de languettes flexibles, inclinées en direction de ladite charnière et répartie circonférentiellement, en saillie radiale vers l'intérieur, sur une surface radialement intérieure du corps de base de part et d'autre de la charnière.

Ainsi, l'idée à la base de l'invention consiste à rattraper les variations de diamètre d'un conduit souple ou semi-souple à raccorder, au moyen de languettes flexibles prévues sur la paroi intérieure du corps de base du collier, languettes qui en position montée du collier sur le conduit à raccorder, fléchissent contre la paroi extérieure du conduit de manière à assurer une mise en pression de cette dernière et un serrage efficace du conduit.

En s'articulant, cette charnière facilite le montage du collier de serrage autour du conduit à raccorder, tandis que le sens de flexion des languettes, lors du serrage du collier, est prédéterminé par leur inclinaison en direction de la charnière.

Selon un autre aspect de la présente invention, le corps de base peut présenter un élargissement sur un côté du collier, par rapport aux extrémités de blocage. Cette disposition est particulièrement avantageuse lorsque, du fait de contraintes géométriques, le conduit à raccorder doit être coudé au-delà du collier de serrage. L'élargissement du corps de base est alors disposé de manière à former, au niveau du coude du conduit, une surface saillante de soutien et de guidage du conduit qui augmente le rayon de courbure du coude et assure le guidage et la fixation de l'accrochage.

Les figures du dessin annexé, donné à titre d'exemple non limitatif, feront bien comprendre comment l'invention peut être réalisée.

La figure 1 est une vue en perspective d'un collier suivant l'invention en position non montée.

La figure 2 est une vue de dessus du collier de la figure 1.

La figure 3 est une vue de profil du même collier.

Comme on peut le voir en se reportant au dessin, le collier de serrage suivant l'invention est constitué d'une seule pièce 1 de forme annulaire fendue, comportant un corps de base 2 et deux extrémités de blocage 3 et 4.

Une première extrémité 3 du collier comporte une saillie 5 radiale vers l'extérieur, puis sur une face supérieure, c'est-à-dire radialement extérieure, une denture 7 qui présente une série de dents inclinées dans une direction opposée à la direction de fermeture du collier.

L'autre extrémité 4 du collier, dirigée vers la première extrémité 3, forme une languette qui constitue une rampe d'entrée pour l'engagement de l'extrémité 3.

L'extrémité 4 est également munie d'une saillie radiale 6, dirigée vers l'extérieur, qui se raccorde à une patte courbe 8 réalisée sensiblement parallèlement à la languette 4.

Une denture 9 est ménagée sur la face inférieure, c'est-à-dire radialement intérieure, de la patte 8.

La denture 9 présente une série de dents inclinées comme celles de la denture 7, de manière que l'on puisse engager progressivement les deux dentures 7 et 9 l'une dans l'autre simplement en poussant manuellement les deux saillies 5 et 6 l'une vers l'autre dans un sens (flèche F) de fermeture du collier.

Par suite, les dents respectives des dentures 7 et 9 s'engagent les unes dans les autres jusqu'à arriver dans une position où se réalise le blocage du collier autour d'un conduit à raccorder (non représenté).

En revanche, l'inclinaison de ces dents ne permet pas de dégager les dentures 7 et 9 l'une de l'autre en agissant dans le sens opposé au sens précédent.

Le dégagement des extrémités de ce collier s'effectue en déplaçant tout d'abord l'une des dentures dans un sens perpendiculaire à son plan puis en l'extrayant de l'autre extrémité.

Une partie intermédiaire du corps de base 2, sensiblement à mi-distance des deux extrémités 3 et 4, est ondulée de manière à former une charnière 10 qui, en s'articulant, facilite le montage du collier de serrage sur le conduit et permet le rapprochement, l'engagement réciproque des extrémités 3 et 4 et ainsi la fermeture du collier.

Des languettes flexibles 11 en saillie radiale vers l'intérieur sont réparties circonférentiellement sur une surface radialement intérieure du corps de base 2. Les languettes flexibles 11 sont disposées de part et d'autre de la charnière 10 et sont inclinées en direction de cette dernière. Le sens de flexion des languettes 11, lors du serrage du collier, est ainsi prédéterminé par leur inclinaison en direction de la charnière 10 du collier.

En position montée du collier sur le conduit à raccorder, les languettes flexibles 11 fléchissent contre la paroi extérieure du conduit de manière à assurer une mise en pression et un serrage efficace du conduit. Cette disposition permet de rattraper, de compenser les variations de diamètre du conduit à raccorder, dues à la souplesse de celui-ci.

Ainsi, les deux extrémités 3 et 4 du collier restent en prise entre elles d'une façon fixe sans risque de décrochement accidentel.

Un ajustement du serrage du collier est en outre assuré automatiquement, rapidement et de façon fiable par l'intermédiaire des languettes flexibles 11.

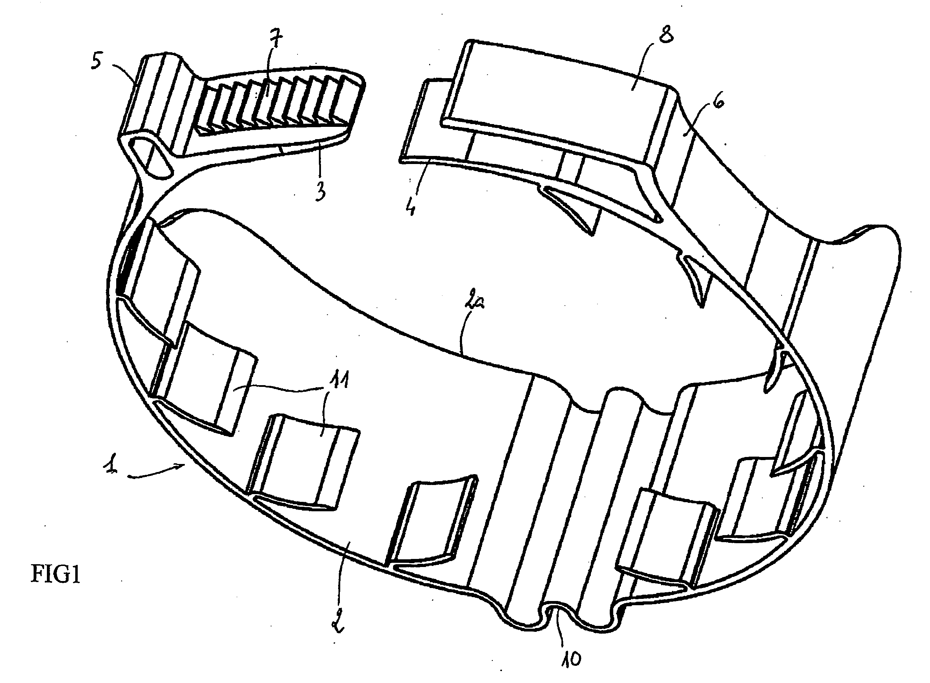

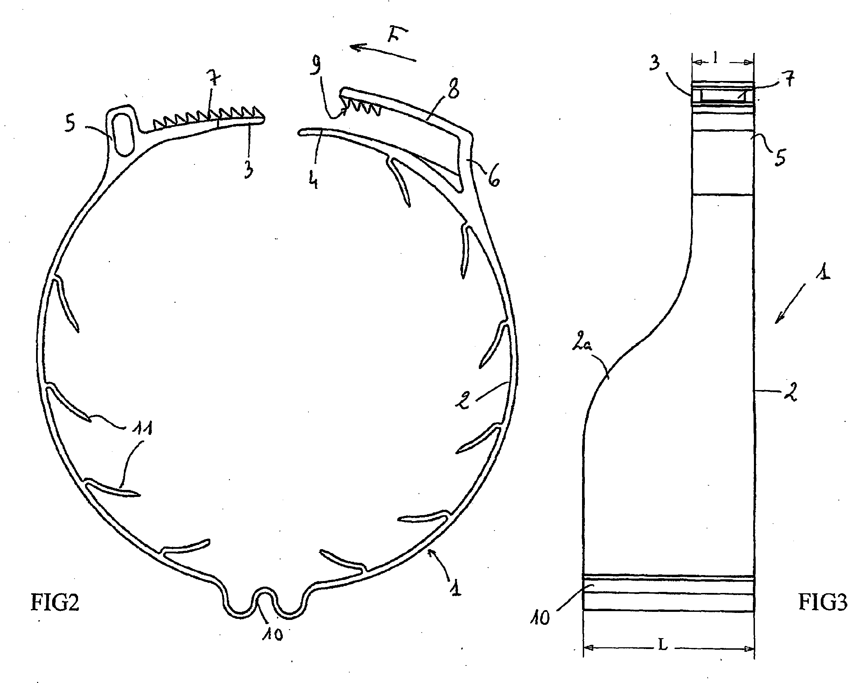

Les figures 1 et 3 montrent que, selon un aspect complémentaire de l'invention, le corps de base 2 présente un élargissement 2a sur un côté du collier, par rapport aux extrémités 3 et 4. La largeur L du corps de base 2 est ainsi sensiblement supérieure à la largeur I des extrémités 3 et 4 du collier.

Cette disposition est particulièrement avantageuse lorsque, du fait de contraintes géométriques, le conduit à raccorder doit être coudé au-delà du collier de serrage.

Cette circonstance peut par exemple se présenter dans le cas du raccordement d'un conduit souple de transport d'air à un groupe de ventilation dans un espace étroit nécessitant de couder le conduit au niveau de son raccordement avec le groupe de ventilation.

L'élargissement 2a du corps de base 2 est alors disposé de manière à former, au niveau du coude (non représenté) du conduit, une surface saillante de soutien et de guidage du conduit qui augmente le rayon de courbure du coude et assure le guidage et la fixation de l'accrochage.

Naturellement, le collier suivant l'invention peut convenir à différents diamètres de conduits, qu'ils soient simples ou à double peau (c'est-à-dire enserrant un matelas d'isolation intégrée), notamment en modifiant judicieusement la longueur de la pièce annulaire 1, la longueur de la denture 7 et éventuellement, le nombre des dents des dentures 7 et 9.

En outre, l'on ne sortirait pas du cadre de l'invention en réalisant le dispositif de prise réciproque entre les deux extrémités 3 et 4 du collier sous une forme différente, par exemple en formant la denture 9 sur la face supérieure de l'extrémité 4 et la denture 7 sur la face inférieure de l'extrémité 3.

## Revendications

1. Collier de serrage rapide constitué d'une seule pièce fendue (1), comportant un corps de base (2) et deux extrémités de blocage (3, 4) munies de dentures (7, 9) opposées correspondantes, destinées à entrer en prise l'une avec l'autre, et comprenant chacune une série de dents inclinées dans une direction opposée à la direction de fermeture (F) du collier, une partie intermédiaire du corps de base (2) étant ondulée de manière à former une charnière (10), **caractérisé en ce qu'**une pluralité de languettes flexibles (11), inclinées en direction de ladite charnière (10) et répartie circonférentiellement, en saillie radiale vers l'intérieur, sur une surface radialement intérieure du corps de base (2) de part et d'autre de la charnière (10).

2. Collier de serrage rapide selon la revendication 1, **caractérisé en ce que** le corps de base (2) présente un élargissement (2a) sur un côté du collier, par rapport aux extrémités de blocage (3, 4).

3. Utilisation d'un collier de serrage rapide selon l'une des revendications 1 et 2, pour le raccordement de conduits souples ou semi-souples, à simple peau ou à double peau avec matelas d'isolation intégrée, notamment des conduits de transport d'air pour une installation de ventilation.

## Claims

1. Quick-action clamping collar consisting of a single split component (1), comprising a basic body (2) and two locking ends (3, 4) with corresponding opposing teeth (7, 9) designed to engage with each other, the teeth being inclined in an opposite direction to the closing direction (F) of the collar, and an intermediate part of the basic body (2) being sinuous so as to form a hinge (10), said collar being **characterized in that** a plurality of flexible tabs (11) inclined toward said hinge (10) are distributed circumferentially, projecting radially inwardly, on a radially inward surface of the basic body (2) on each side of the hinge (10).

2. Quick-action clamping collar according to Claim 1, **characterized in that** the basic body (2) has on one side of the collar an area (2a) that is wider than the locking ends (3, 4).

3. Use of a quick-action clamping collar according to either of Claims 1 and 2, for connecting flexible or semiflexible single-skin duct or double-skin duct with integrated insulating layer, such as air conveying ducts for a ventilation system.

## Patentansprüche

1. Schnellklemmschelle, die aus einem einzigen gespaltenen Teil (1) besteht, der einen Basiskörper (2) und zwei Verriegelungsenden (3, 4) aufweist, die mit entsprechenden, gegenüberliegenden Verzahnungen (7, 9) versehen sind, die sich gegenseitig in Eingriff nehmen sollen, und jeweils eine Reihe von Zähnen aufweisen, die in einer der Schließrichtung (F) der Schelle entgegengesetzten Richtung geneigt sind, wobei ein Zwischenteil des Basiskörpers (2) gewellt ist, um ein Gelenk (10) zu bilden, **dadurch gekennzeichnet, dass** mehrere flexible Laschen (11), die in Richtung des Gelenks (10) geneigt sind und radial nach innen vorstehen, an einer radial inneren Fläche des Basiskörpers (2) auf beiden Seiten des Gelenks (10) um den Umfang verteilt sind.

2. Schnellklemmschelle nach Anspruch 1, **dadurch gekennzeichnet, dass** der Basiskörper (2) eine Verbreiterung (2a) an einer Seite der Schelle bezüglich der Verriegelungsenden (3, 4) aufweist.

3. Verwendung einer Schnellklemmschelle nach einem der Ansprüche 1 und 2 zur Verbindung von flexiblen oder semiflexiblen ein- oder doppelwandigen Leitungen mit integrierter Isolierschicht, insbesondere von Luftbeförderungsleitungen für eine Lüftungsanlage.
